Europäisches Patentamt

European Patent Office

Office européen des brevets

(19)

(11) **EP 0 658 310 B1**

(12) **EUROPÄISCHE PATENTSCHRIFT**

(45) Veröffentlichungstag und Bekanntmachung des Hinweises auf die Patenterteilung:
**14.03.2001 Patentblatt 2001/11**

(51) Int Cl.⁷: **A22C 13/00**

(21) Anmeldenummer: **94118926.8**

(22) Anmeldetag: **01.12.1994**

(54) **Mindestens 4-schichtig coextrudierte, biaxial verstreckte, transparente, schlauchförmige Wursthülle mit hoher Barrierewirkung gegenüber Wasserdampf-Sauerstoffpermeation und Lichtdurchlässigkeit**

At least four-layered, coextruded, biaxially stretched, transparent, tubular sausage casing having improved barrier properties against water-vapour-oxygen permeation and light transmittance

Enveloppe tubulaire transparente, étirée biaxialement et coextrudée, contenant au moins quatre couches, et ayant des propriétés de barrière améliorées à la perméation de vapeur d'eau et d'oxygène et à la transmission de lumière

(84) Benannte Vertragsstaaten:
**AT BE CH DE DK ES FR GB IT LI NL**

(30) Priorität: **14.12.1993 DE 4342618**

(43) Veröffentlichungstag der Anmeldung:
**21.06.1995 Patentblatt 1995/25**

(73) Patentinhaber: **WOLFF WALSRODE AG**
**29655 Walsrode (DE)**

(72) Erfinder:
• **Hennig-Cardinal von Widdern, Michael, Dipl.-Ing.**
**D-29664 Walsrode (DE)**
• **Krallmann, Anton, Dipl.-Ing.**
**D-29683 Fallingbostel (DE)**
• **Reiners, Ulrich, Dr.**
**D-29643 Neuenkirchen (DE)**

(74) Vertreter: **Braun, Rolf, Dr. et al**
**Bayer AG,**
**Konzernbereich RP,**
**Patente und Lizenzen**
**51368 Leverkusen (DE)**

(56) Entgegenhaltungen:
EP-A- 0 132 565          EP-A- 0 467 039
EP-A- 0 530 538          EP-A- 0 530 549
EP-A- 0 550 833          EP-A- 0 603 678

## Beschreibung

Die Erfindung betrifft eine mindestens 4-schichtig coextrudierte, biaxial verstreckte, transparente, schlauchförmige Wursthülle, insbesondere zur Umhüllung von Brüh- und Kochwurst, deren hohe Barrierewirkung gegenüber Wasserdampf- und Sauerstoffpermeation und gegenüber Lichttransmission eine Lagerung der umhüllten Produkte über vergleichsweise lange Zeiträume zuläßt, ohne daß die umhüllten Produkte visuell erkennbaren Schaden nehmen.

Bei der industriellen Brüh- und Kochwurstherstellung haben sich biaxial verstreckte Kunststoffhüllen auf der Basis von Polyvinylidenchlorid-Copolymeren (PVDC) und Polyamid (PA) in vielerlei Hinsicht seit Jahren bewährt. Während die Marktverbreitung von PA-Hüllen weiter steigt, ist bei PVDC-Hüllen eher eine abnehmende Akzeptanz zu beobachten. Die sehr guten Barriereeigenschaften der PVDC-Hülle können die bekannten Nachteile, wie hohe Materialkosten, geringe Thermostabilität bei der thermoplastischen Verarbeitung, geringer Weiterreißwiderstand und nicht zuletzt die abnehmende Akzeptanz aufgrund ökologischer Bedenken nicht aufwiegen.

Seither hat es viele Versuche gegeben, die Barriereeigenschaften von verstreckten PA-Hüllen zu verbessern.

In der DE 28 50 181 wird eine einschichtige, biaxial verstreckte Hülle aus einer Polymermischung aus aliphatischem Polyamid und einem olefinischen Copolymer beschrieben. Durch die Zumischung des olefinischen Copolymers kann zwar eine deutliche Reduzierung der Wasserdampfpermeation erreicht werden, aber insbesondere die Wasserdampfbarrierewirkung von PVDC wird bei weitem nicht erreicht. Die unzureichende Wasserdampfbarriere führt dazu, daß im Verlauf der Lagerzeit Gewichtsverluste infolge des Abdampfens von Wasser auftreten. Dies schmälert nicht nur den Erlös für das Wurstprodukt, sondern führt desweiteren zu faltigen, unansehnlichen Produkten.

In der japanischen Anmeldung JP 10 14 032 wird eine biaxial gereckte, coextrudierte Schlauchfolie für die Anwendung als Brüh- und Kochwurstumhüllung aus 3 Polymerschichten beschrieben, wobei die äußere, dem Füllgut abgewandte Schicht aus aliphatischem PA und die innere, dem Füllgut zugewandte Schicht aus Ethylen-Acrylsäure-Copolymerem besteht. Die zwischen der äußeren und inneren Schicht angeordnete Lage aus Propylen- beziehungsweise Ethylenbasierenden Copolymerem dient als Haftvermittler. Die innere Polymerschicht aus Ethylen-Acrylsäure-Copolymerem übernimmt hierbei die Funktion der Bräthaftung. Gemäß einer nachfolgenden Anmeldung, GB 22 05 273, wird die Bräthaftung der innenliegenden Schicht aus linear low density-Polyethylen (LLDPE) durch eine aufwendige, auf die Innenseite des Folienschlauches wirkende Coronavorbehandlung, verbessert.

Während durch diese Folienstruktur eine gute Wasserdampfbarriere erreicht werden kann, bemängelt der Verbraucher insbesondere Eigenschaften, wie zu hohen Weiterreißwiderstand, unzureichende Bräthaftung und Oberflächenvergrauung von sauerstoff- und lichtempfindlichen Füllgütern im Verlauf der Lagerzeit.

Durch die Beimischung von Ethylen-Vinylalkohol-Copolymerem (EVOH) zum aliphatischen PA erreicht man gemäß EP 02 16 094 bei einschichtigen PA-Hüllen eine verbesserte Sauerstoffbarriere bei gleichzeitig hoher Durchlässigkeit von Rauchgeschmacksträgern. Durch die Zumischung von EVOH kann zwar eine deutliche Reduzierung der Sauerstoffpermeation erreicht werden, dies reicht jedoch nicht aus, um die Vergrauung der Füllgutoberfläche im Verlauf der Lagerzeit wirksam zu unterdrücken. Desweiteren führt unzureichende Thermostabilität des EVOH bei der gemeinsamen Extrusion mit PA bei höheren Temperaturen zum Vernetzen des EVOH, was den Herstellungsprozeß dieser Hülle stört. Die unzureichende Wasserdampfbarriere verursacht faltige Wurstprodukte im Verlauf der Lagerzeit.

EP-A-0 530 538 offenbart eine mindestens 5-schichtige coextrudierte, biaxial gereckte Schlauchfolie, aufgebaut aus mindestens drei Polyamidschichten, die die Kern-, die innere und die äußere Schicht bilden und zwischen diesen Polyamidschichten olefinische (Co)-Polymerschichten, z.B. EVOH

In DE 41 41 292 wird eine einschichtige, biaxial orientierte, schlauchförmige PA-Nahrungsmittelhülle beschrieben, die im wesentlichen aus aliphatischem Polyamid, teilaromatischem Copolyamid, säuremodifiziertem Polyolefin und Feinstpigment besteht. Während diese Folienrezeptur insbesondere auf eine ausreichende Lichtbarriere abzielt, sind die Barriereeigenschaften hinsichtlich Wasserdampf- und Sauerstoffpermeation unzureichend.

Die Aufgabe der vorliegenden Erfindung bestand darin, die Nachteile der im Stand der Technik beschriebenen Wursthüllen auf Polyamidbasis zu vermeiden, ohne die positiven Eigenschaften der bekannten PA-Hüllen zu beeinträchtigen. Der Schwerpunkt der Aufgabe lag in der verbesserten Lagerfähigkeit der insbesondere mit transparenter Folie umhüllten Wurstprodukte, die auch einer mehrwöchigen Lagerzeit ohne visuell erkennbare Schädigung standhalten sollen.

Die erfindungsgemäße Wursthülle ist eine Weiterentwicklung der DE 43 06 274. Darin wird eine mindestens 4-schichtig coextrudierte Wursthülle mit einer innen- und einer außenliegenden Schicht aus überwiegend aliphatischem Polyamid beschrieben, die dadurch gekennzeichnet ist, daß diese mindestens zwei weitere Schichten im Folienkern aufweist, wobei die eine Schicht im wesentlichen aus Ethylen-Vinylalkohol-Copolymerem und die andere Schicht aus Ethylen- und/oder Propylen-basierenden Polymeren besteht.

Die Aufgabe, eine Verbesserung der Lagerfähigkeit insbesondere von mit transparenter Folie umhüllten Wurstprodukten zu erzielen, wird durch eine mindestens 4-schichtig coextrudierte, biaxial verstreckte, transparente, schlauchförmige Wursthülle erreicht, die mindestens zwei Schichten überwiegend aus aliphatischem Polyamid enthält, die die innen- und außenliegenden Schlauchoberflächen bilden, und zwei weitere Schichten, die durch die innen- und außenliegenden Polyamidschichten eingeschlossen sind, wobei mindestens eine der eingeschlossenen Schichten wasserdampfsperrend wirkt und polyolefinischen Charakter aufweist und mindestens eine weitere der eingeschlossenen Schichten hohe sauerstoffsperrende Wirkung aufweist und überwiegend aus Ethylen-Vinylalkohol-Copolymerem besteht, die dadurch gekennzeichnet ist, daß mindestens eine Schicht des Folienverbundes feinstteiliges Pigment mit einer mittleren Korngröße zwischen 0,01 und 5 Mikrometern in einer Menge von bis zu 3 Gew.-%, bezogen auf das Gesamtgewicht der Hülle, enthält und mindestens eine Schicht des Folienverbundes überwiegend aus aliphatischem Polyamid und anteilig aus teilaromatischem Copolyamid in einer Menge von 1 bis 15 Gew.-% besteht mit Ausnahme von solchen Folienverbunden, bei denen die Wursthülle nahtlos ist, die durch die innen- und außenliegenden Polyamidschichten eingeschlossene Schicht mit wasserdampfsperrender Funktion aus Polyethylen oder Polypropylen und/oder Ethylen und/oder propylenbasierenden Copolymeren aufgebaut ist, die anorganischen Pigmente eine Partikelgröße von ca. 1 pm haben, eine weitere Schicht aus überwiegend aliphatischem Polyamid vorliegt das durch Zugabe von 5-50 Gew.-%, bezogen auf das Gesamtgewicht des Polymergemisches, (teil)aromatischem Polyamid modifiziert ist, und diese mit mindestens einer der innen- und außenliegenden Polyamidschichten direkt verbunden ist.

Überraschenderweise kann unter Beibehaltung der im allgemeinen positiven Eigenschaften von Polyamid-Wursthüllen durch die erfingungsgemäße Kombination von mindestens drei charakteristischen Folienmerkmalen

- mindestens eine geschlossene Schicht aus Ethylen-Vinylalkohol-Copolymerem
- mindestens eine geschlossene Schicht aus einem Polyamid-Blend: aliphatisches PA und teilaromatisches Copolyamid
- mindestens eine geschlossene Schicht, die feinstteilige, anorganische Pigmente enthält

die Lagerbeständigkeit des Wurstproduktes hinsichtlich Vergrauung der Füllgutoberfläche deutlich verbessert werden.

Die geschlossene Schicht aus Ethylen-Vinylalkohol-Copolymerem erreicht ihre anwendungsgerechte Sauerstoffbarrierewirkung bereits bei einer Schichtdicke von 1 bis 5 Mikrometern, was eine Folge der biaxialen Verstreckung der Schlauchfolie ist. In einer bevorzugten Ausführungsform weist das Ethylen-Vinylalkohol-Copolymer einen Ethylengehalt von 29 bis 47 Gew.-% auf und ist an die innen- oder außenliegende Polyamidschicht angebunden. In einer besonders bevorzugten Ausführungsform ist diese Copolymerschicht beidseitig von Schichten aus überwiegend aliphatischem Polyamid umgeben, so daß der Folienverbund drei geschlossene Polyamidschichten enthält. Die beidseitige Ankopplung an Schichten aus überwiegend aliphatischem Polyamid stabilisiert den Reckprozeß und garantiert eine hohe Verbundhaftung zwischen den Polyamidschichten und der Schicht aus Ethylen-Vinylalkohol-Copolymerem.

Das Ziel der verbesserten Lagerbeständigkeit hinsichtlich reduzierter Oberflächenvergrauung des Füllgutes wird bereits durch eine einzelne geschlossene Schicht aus einem Polymerblend mit aliphatischem Polyamid und teilaromatischen Polyamidkomponenten erreicht, wenn die weiteren charakteristischen Folienmerkmale einer geschlossenen Schicht aus Ethylen-Vinylalkohol-Copolymerem und feinstteiligem Pigment in mindestens einer geschlossenen Polymerschicht erfüllt werden.

In einer bevorzugten Ausführungsform besteht das teilaromatische Copolyamid aus Hexamethylendiamin, Isophthalsäure und Terephthalsäure und wird dem aliphatischen Polyamid in einer Menge von 1 bis 15 Gew.-% zugemischt. In einer besonders bevorzugten Ausführung werden 2 bis 10 Gew.-% teilaromatisches Copolyamid zugemischt.

Bei der Zumischung von anorganischen Feinstpigment ist es nach bisheriger Kenntnis von untergeordneter Bedeutung, ob das Feinstpigment in eine oder mehrere Schichten eingearbeitet wird und welche Schichtdicken, gemeint sind praxisrelevante Schichtdicken von 2 bis 30 μm, die das Feinstpigment tragenden Schichten aufweisen. Dagegen ist es von großer Bedeutung, daß die Partikelgröße kleiner gleich 5 μm ist, da sonst die Transparenz der Hülle gestört wird. Geeignete anorganische Pigmente sind z.B. Zinkoxid, Titandioxid, Eisenoxid und Siliciumdioxid. In einer besonders bevorzugten Ausführungsform der erfindungsgemäßen Hülle wird das anorganische Feinstpigment in eine wasserdampfsperrende Schicht mit polyolefinischem Charakter und einer Schichtdicke zwischen 2 bis 10 μm eingemischt. Aus herstellungstechnischer Sicht bietet es sich an, das Feinstpigment mittels Masterbatch, dessen Trägermaterial mit dem Grundmaterial der Schicht kompatibel ist, in den Folienverbund einzubringen. Die Menge des Pigments liegt bei 0,1 bis 3 Gew.-%, bevorzugt 0,5 bis 2,5 Gew.-%, bezogen auf das Gesamtgewicht der Hülle.

Betreffend die Lagerbeständigkeit des Wurstproduktes beurteilt der Praktiker desweiteren die Gewichtsverluste des umhüllten Wurstproduktes im Verlauf der Lagerzeit, die durch Abdampfen von Wasser eintreten. Da durch den Gewichtsverlust nicht nur der Verkaufserlös des Wurstproduktes geschmälert wird, sondern der mit dem Gewichtsverlust einhergehende Volumenverlust des Füllgutes zu faltigen Produkten führt, die der Endverbraucher als alt und unappetitlich empfindet, wird der Wasserdampfbarriere große Bedeutung zugemessen. Auch dieses Kriterium der Wasserdampfsperre wird von der erfindungsgemäßen biaxial verstreckten Hülle durch die wasserdampfsperrende Schicht mit polyolefinischem Charakter mit hoher Zuverlässigkeit erfüllt.

Die erfindungsgemäße Hülle verreinigt somit eine bisher unerreichte Kombination an anwendungsrelevanten Eigenschaften:

- Sichere Bräthaftung
- Sichere Druckfarbenhaftung
- Sicherer Füllmaschinenablauf
- Verhinderung von Oberflächenvergrauung des Füllgutes während der Lagerung
- Verhinderung von Gewichtsverlusten während der Lagerung
- Faltenfreies Anliegen um das Füllgut infolge von Elastizität und thermisch initiierbarem Schrumpf
- Gutes Schälverhalten (isotroper Weiterreißwiderstand)

Zudem kann diese Hülle aus produktionstechnischer Sicht einfach und störungsfrei hergestellt und konfektioniert werden.

Die Herstellung der erfindungsgemäßen Schlauchfolie erfolgt vorzugsweise nach dem "double bubble"- beziehungsweise nach dem "injected bubble"-Verfahren, bei dem zunächst das schlauchförmige Extrudat durch intensive Kühlung in den Festkörperzustand überführt wird und dann im weiteren Verlauf des Herstellungsverfahrens der so erhaltene relativ dickwandige Schlauch (300 bis 600 µm) auf eine zur Festkörperverstreckung geeignete Temperatur wiedererwärmt wird, um anschließend zwischen zwei dicht abschließenden Walzenpaaren mittels Einschluß eines Druckpolsters sowohl in Quer- als auch in Längsrichtung verstreckt zu werden. Die Wiedererwärmung kann in einer oder mehreren Stufen zum Beispiel mittels heißer Luft, Heißdampf, temperiertem Wasserbad und/oder InfrarotStrahlern erfolgen. Der biaxialen Verstreckung folgt in einer bevorzugten Ausführung eine Thermofixierstrecke, in der der zuvor verstreckte Folienschlauch bei Umgebungstemperaturen zwischen 80 und 320°C eine Spannungsrelaxation erfährt. Auch die Thermofixierung kann in einer oder mehreren Stufen zum Beispiel mittels heißer Luft, Heißdampf, temperiertem Wasserbad und/oder InfrarotStrahlern durchgeführt werden, wobei in Abhängigkeit zum gewünschten Restschrumpf eine gewisse Durchmesserreduzierung zugelassen werden kann. Der Durchmesser des Schlauches kann durch Variation des Druckpolsters in der Thermofixierstrecke gesteuert werden. Die Thermofixierung des Folienschlauches in Gegenwart von Wasser, beziehungsweise Wasserdampf, bewirkt zudem infolge temperaturbedingt rascher Wasseraufnahme der Polyamide ein Erweichen der polyamidhaltigen Schichten und somit eine erhöhte Flexibilität der Folie.

Das Wickeln der biaxial gereckten Schlauchfolie wird bevorzugt mit changierenden Wicklern durchgeführt, um durch das seitliche Verlegen der Folie ein Aufbauen der Liegekanten zu verhindern. In einer besonders bevorzugten Herstellungsweise wird der Folienschlauch mindestens an einer Stelle des Produktionsprozesses kontinuierlich ossillierend um seine Längsachse gedreht, damit sich unvermeidliche Dickstellen der Folie nicht auf dem Wickel zu "Kolbenringen" addieren.

Die biaxial verstreckte Schlauchfolie wird einem für Brüh- und Kochwurstanwendungen typischen Durchmesserbereich zwischen 30 und 150 mm hergestellt. Die Dicke der coextrudierten Folie bewegt sich zwischen in bevorzugten Ausführungsformen zwischen 35 und 70 Mikrometern.

Der Gegenstand der Erfindung soll anhand der folgenden Beispiele näher erläutert werden.

## Beispiele

Die im nachfolgenden aufgeführten Beispiele wurden an einer 5-Schicht-Schlauchfoliencoextrusionslinie realisiert. Das Plastifizieren und Homogenisieren der thermoplastischen Polymere erfolgte entsprechend der Polymerschichtenanzahl durch 1 bis 5 separate Extruder.

Die Beurteilung der unterschiedlichen Schlauchfolienmuster wurde einerseits durch die Messung von Wasserdampf- und Sauerstoffdurchlässigkeit und andererseits durch Auswertung eines vergleichenden Füllversuches vorgenommen. Bei diesem vergleichenden Füllversuch wurden die Schlauchfolienmuster mit feinem Leberwurstbrät gefüllt und anschließend über eine Dauer von 1 Stunde bei 80°C im Kessel gebrüht, gekühlt und eingelagert.

Ausgehend von der Zielsetzung einer verbesserten Lagerbeständigkeit werden nun einerseits die Gewichtsverluste gemessen und andererseits das Voranschreiten der Oberflächenvergrauung im Verlauf der Lagerzeit beobachtet. Die Lagerbedingungen sind dadurch gekennzeichnet, daß die Lagertemperatur 23°C beträgt, die Luftfeuchtigkeit auf 60% eingestellt ist und die Lagerung unter ständiger Belichtung stattfindet. Die Lagerbedingungen werden so gewählt, um für das Füllgut besonders kritische, aber durchaus praxisrelevante Randbedingungen zu schaffen.

In den nachfolgenden Beispielen werden für die verwendeten Polymere folgende Abkürzungen gewählt:

A1      Polyamid 6 (Durethan B 38 F von Bayer)

A2      teilaromatisches Copolyamid ( Selar PA 3426 von DU PONT)

B1      Propylen-basierendes Copolymer ( Admer QF 551 E von Mitsui)

C1      Ethylen-Vinylalkohol-Copolymer ( EVAL EP-F 101 BZ von Kuraray)

MB1    Masterbatch auf der Basis von Polyamid 6, enthaltend 10 Gew.-% feinstteiliges Titandioxid (mittlere Korngröße 0,06 μm)

MB2    Masterbatch auf der Basis von Polyamid 6, enthaltend 10 Gew.-% feinstteiliges Zinkoxid (mittlere Korngröße 0,9 μm)

MB3    Masterbatch auf der Basis eines Propylen-basierenden Copolymeren, enthaltend 10 Gew.-% feinstteiliges Titandioxd (mittlere Korngröße 0,06 μm)

MB4    Masterbatch auf der Basis eines Propylen-basierenden Copolymeren, enthaltend 10 Gew.-% feinstteiliges Zinkoxid (mittlere Korngröße 0,9 μm)

**Beispiel 1**

Aus dem Coextrusionswerkzeug tritt ein 4-schichtig coextrudierter schmelzeflüssiger Primärschlauch mit dem Aufbau (von innen nach außen):

Schicht 1:      95 Gew.-% A1 + 5 Gew.-% A2
Schicht 2:      100 % B1
Schicht 3:      100 % C1
Schicht 4:      95 Gew.-% A1 + 5 Gew.-% MB1

Der Primärschlauch wird sowohl von innen als auch von außen mittels 10°C temperierten Wassers abgekühlt und in die Festkörperform überführt. Nach der Abkühlung weist der Primärschlauch einen Durchmesser von 14 mm auf.
Anschließend wird der Primärschlauch in einem auf 245°C temperiertem Luftstrom wiedererwärmt und im Festkörperzustand durch Einschluß einer Druckluftblase zwischen zwei luftdicht abschließenden Walzenpaaren um das 3,2-fache in Querrichtung und um das 3-fache in Längsrichtung biaxial verstreckt.
Wiederum zwischen zwei luftdicht abschließenden Walzenpaaren durchläuft der biaxial verstreckte Schlauch eine auf 300°C temperierte Wärmebehandlungszone, wobei ein innen eingebrachtes Druckvolumenpolster den thermisch initiierten Querschrumpf auf ca. 10 % beschränkt. In Längsrichtung wird nur ein Schrumpf von ca. 3% zugelassen.
Die so erhaltene Folie verfügt über eine gute Transparenz, hat einen Durchmesser von 40 mm und weist folgende Schichtdickenverteilung auf:

Schicht 1:      10 μm
Schicht 2:      4 μm
Schicht 3:      3 μm
Schicht 4:      25 μm

Die Hülle wird gemäß oben definierter Vorgehensweise vergleichend mit den anderen Folien geprüft. Die Ergebnisse sind in der Tabelle 1 aufgeführt.

**Beispiel 2**

In gleicher Weise, wie in Beispiel 1 beschrieben, wird ein Primärschlauch mit dem Aufbau

Schicht 1:      95 Gew.-% Al + 5 Gew.-% A2
Schicht 2:      100 % B1
Schicht 3:      100 % C1
Schicht 4:      95 Gew.-% A1 + 5 Gew.-% MB2

erzeugt und nach gleichem Procedere weiterverarbeitet.
Die so erhaltene Folie verfügt im Vergleich zu Beispiel 1 über eine geringfügig schlechtere Transparenz, hat einen Durchmesser von 40 mm und weist folgende Schichtdickenverteilung auf:

Schicht 1:      10 μm
Schicht 2:      4 μm

Schicht 3:      3 µm
Schicht 4:      25 µm

Die Prüfungsergebnisse sind der Tabelle 1 zu entnehmen.

### Beispiel 3

Es wird ein Primärschlauch mit dem Aufbau

Schicht 1:      95 Gew.-% A1 + 5 Gew.-% A2
Schicht 2:      50 Gew.-% B1 + 50 Gew.-% MB3
Schicht 3:      100 % C1
Schicht 4:      100 % A1

erzeugt.
Die fertiggestellte Folie verfügt über eine gute Transparenz, hat einen Durchmesser von 40 mm und weist folgende Schichtdickenverteilung auf:

Schicht 1:      10 µm
Schicht 2:      4 µm
Schicht 3:      3 µm
Schicht 4:      25 µm

Die Prüfungsergebnisse sind der Tabelle 1 zu entnehmen.

### Beispiel 4

Es wird ein Primärschlauch mit dem Aufbau

Schicht 1:      95 Gew.-% Al + 5 Gew.-% A2
Schicht 2:      50 Gew.-% B1 + 50 Gew.-% MB4
Schicht 3:      100 % C1
Schicht 4:      100 % A1

erzeugt.
Die fertige Folie verfügt gegenüber Beispiel 1 über eine geringfügig reduzierte Transparenz, hat einen Durchmesser von 40 mm und weist folgende Schichtdickenverteilung auf:

Schicht 1:      10 µm
Schicht 2:      4 µm
Schicht 3:      3 µm
Schicht 4:      25 µm

Die Prüfungsergebnisse sind der Tabelle 1 zu entnehmen.

### Beispiel 5

Es wird ein Primärschlauch mit dem Aufbau

Schicht 1:      95 Gew.-% A1 + 5 Gew.-% A2
Schicht 2:      100 % B1
Schicht 3:      100 % C1
Schicht 4:      100 % B1
Schicht 5:      95 Gew.-% A1 + 5 Gew.-% MB1

erzeugt.
Die fertige Folie verfügt über eine gute Transparenz, hat einen Durchmesser von 40 mm und weist folgende Schichtdickenverteilung auf:

Schicht 1:      10 μm
Schicht 2:      3 μm
Schicht 3:      3 μm
Schicht 4:      3 μm
Schicht 5:      25 μm

Die Prüfungsergebnisse sind der Tabelle 1 zu entnehmen.

**Beispiel 6**

Es wird ein Primärschlauch mit dem Aufbau

Schicht 1:      100 % A1
Schicht 2:      70 Gew.-% B1 + 30 Gew.-% MB3
Schicht 3:      100 % C1
Schicht 4:      70 Gew.-% B1 + 30 Gew.-% MB3
Schicht 5:      95 Gew.-% A1 + 5 Gew.-% A2

erzeugt.

Die fertige Folie verfügt über eine gute Transparenz, hat einen Durchmesser von 40 mm und weist folgende Schichtdickenverteilung auf:

Schicht 1:      10 μm
Schicht 2:      3 μm
Schicht 3:      3 μm
Schicht 4:      3 μm
Schicht 5:      25 μm

Die Prüfungsergebnisse sind der Tabelle 1 zu entnehmen.

**Beispiel 7**

Es wird ein Primärschlauch mit dem Aufbau

Schicht 1:      100 % A1
Schicht 2:      100% B1
Schicht 3:      95 Gew.-% A1 + 5 Gew.-% A2
Schicht 4:      100 % C1
Schicht 5:      95 Gew.-% A1 + 5 Gew.-% MB1

erzeugt.
Die fertige Folie verfügt über eine gute Transparenz, hat einen Durchmesser von 40 mm und weist folgende Schichtdickenverteilung auf:

Schicht 1:      5 μm
Schicht 2:      4 μm
Schicht 3:      10 μm
Schicht 4:      3 μm
Schicht 5:      20 μm

Die Prüfungsergebnisse sind der Tabelle 1 zu entnehmen.

**Beispiel 8**

Es wird ein Primärschlauch mit dem Aufbau

Schicht 1:      100 % A1
Schicht 2:      50 Gew.-% B1 + 50 Gew.-% MB3

| Schicht 3: | 95 Gew.-% A1 + 5 Gew.-% A2 |
| Schicht 4: | 100 % C1 |
| Schicht 5: | 100 % A1 |

erzeugt.

Die fertige Folie verfügt über eine gute Transparenz, hat einen Durchmesser von 40 mm und weist folgende Schichtdickenverteilung auf:

| Schicht 1: | 5 µm |
| Schicht 2: | 4 µm |
| Schicht 3: | 10 µm |
| Schicht 4: | 3 µm |
| Schicht 5: | 20 µm |

Die Prüfungsergebnisse sind der Tabelle 1 zu entnehmen.

### Vergleichsbeispiel 1

Es wird ein 1-schichtig extrudierter Primärschlauch aus einem binären Polymerblend bestehend aus

90 Gew.-% A1 + 10 Gew.-% C1

hergestellt und in gleicher Weise, wie in Beispiel 1 beschrieben, weiterverarbeitet. Die fertige Folie weist eine gute Transparenz auf und ist 40 µm dick.

Die Prüfungsergebnisse sind der Tabelle 1 zu entnehmen.

### Vergleichsbeispiel 2

Es wird ein 1-schichtig extrudierter Primärschlauch aus einem ternären Polymerblend, bestehend aus

82 Gew.-% A1 + 5 Gew.-% A2 + 10 Gew.-% B1 + 3 Gew.-% MB1

hergestellt und in gleicher Weise, wie in Beispiel 1 beschrieben, weiterverarbeitet. Die fertige Folie weist eine gute Transparenz auf und ist 40 µm dick.

Die Prüfungsergebnisse sind der Tabelle 1 zu entnehmen.

### Vergleichsbeispiel 3

Es wird ein Primärschlauch mit dem Aufbau

| Schicht 1: | 100 % A1 |
| Schicht 2: | 100 % B1 |
| Schicht 3: | 95 Gew.-% A1 + 5 Gew.-% A2 |
| Schicht 4: | 100 % C1 |
| Schicht 5: | 100 % A1 |

erzeugt.

Die fertige Folie verfügt über eine gute Transparenz, hat einen Durchmesser von 40 mm und weist folgende Schichtdickenverteilung auf:

| Schicht 1: | 5 µm |
| Schicht 2: | 4 µm |
| Schicht 3: | 10 µm |
| Schicht 4: | 3 µm |
| Schicht 5: | 20 µm |

Die Prüfungsergebnisse sind der Tabelle 1 zu entnehmen.

| Tabelle 1 | Gasdurchlässigkeit | | Füllgutgewichtsverlust im Verlauf der Lagerung | | Brätvergrauung |
|---|---|---|---|---|---|
| Beispiel Nr. | Sauerstoff (1) [ml/m²bar d] | Wasserdampf (2) [g/m² d] | Dauer 10 Tage [%] | Dauer 20 Tage [%] | Visuelle Beurteilung (3) [1 - 4] |
| 1 | 4 | 4 | 0 | 0,2 | 1 |
| 2 | 4 | 4 | 0 | 0,2 | 1 |
| 3 | 4 | 4 | 0 | 0,2 | 1 |
| 4 | 4 | 4 | 0 | 0,2 | 1 |
| 5 | 4 | 3 | 0 | 0,2 | 1 |
| 6 | 4 | 3 | 0 | 0,2 | 1 |
| 7 | 4 | 4 | 0 | 0,2 | 1 |
| 8 | 4 | 4 | 0 | 0,2 | 1 |
| V1 | 12 | 15 | 1,1 | 2,1 | 4 |
| V2 | 24 | 9 | 0,5 | 1 | 2 |
| V3 | 4 | 4 | 0 | 0,2 | 3 |

(1) 02-DU gemessen nach DIN 53 380 bei 23°C und 75 % r.F.
(2) WD-DU gemessen nach DIN 53 122 bei 23°C und einem Feuchtigkeitsgefälle von 85 % r.F.
(3) Benotungssystem:
1 = keine Brätvergrauung erkennbar
2 = geringfügige Brätvergrauung erkennbar
3 = Brätvergrauung deutlich erkennbar
4 = sehr starke Brätvergrauung

**Patentansprüche**

1.   Mindestens 4-schichtig coextrudierte, biaxial verstreckte, transparente, schlauchförmige Wursthülle, insbesondere zur Umhüllung von Brüh- und Kochwurst, enthaltend mindestens zwei Schichten überwiegend aus aliphatischem Polyamid, die die innen- und außenliegenden Schlauchoberflächen bilden, und mindestens zwei weitere Schichten, die durch die innen- und außenliegenden Polyamidschichten eingeschlossen sind, wobei mindestens eine der eingeschlossenen Schichten wasserdampfsperrend wirkt und polyolefinischen Charakter aufweist und mindestens eine weitere der eingeschlossenen Schichten eine hohe sauerstoffsperrende Wirkung aufweist und überwiegend aus Ethylenvinylalkoholcopolymerem besteht, dadurch gekennzeichnet, dass mindestens eine Schicht des Folienverbundes feinstteilige, anorganische Pigmente mit einer mittleren Korngröße zwischen 0,01 und 5 Mikrometern in einer Menge von bis zu 3 Gew.-%, bezogen auf das Gesamtgewicht der Hülle, enthält und mindestens eine Schicht des Folienverbundes überwiegend aus aliphatischem Polyamid und anteilig aus teilaromatischem Copolyamid in einer Menge von 1 bis 15 Gew.-% besteht mit Ausnahme von solchen Folienverbunden, bei denen die Wursthülle nahtlos ist, die durch die innen- und außenliegenden Polyamidschichten eingeschlossene Schicht mit wasserdampfsperrrender Funktion aus Polyethylen oder Polypropylen und/oder Ethylen und/oder propylenbasierenden Copolymeren aufgebaut ist, die anorganischen Pigmente eine Partikelgröße von ca. 1 µm haben, eine weitere Schicht aus überwiegend aliphatischem Polyamid vorliegt das durchZugabe von 5-50 Gew.-%, bezogen auf das Gesamtgewicht des Polymergemisches, (teil)aromatischem Polyamid modifiziert ist, und diese mit mindestens einer der innen- und außenliegenden Polyamidschichten direkt verbunden ist.

2. Hülle nach Anspruch 1, dadurch gekennzeichnet, daß das aliphatische Polyamid ein lineares Polyamid (PA) 6, PA 11, PA 12 und/oder lineares Copolyamid PA 6.66, PA 6.8, PA 6.9, PA 6.10, PA 6.11, PA 6.12 oder eine Mischung der vorgenannten aliphatischen Polyamide und Copolyamide ist.

3. Hülle nach Anspruch 1, dadurch gekennzeichnet, daß das teilaromatische Copolyamid aus Diaminmonomeren und Dicarbonsäuremonomeren besteht.

4. Hülle nach wenigstens einem der vorhergehenden Ansprüche, dadurch gekennzeichnet, daß mindestens eine der überwiegend aus aliphatischem Polyamid bestehenden Schichten 70 bis 95 Gew.-% lineares aliphatisches Polyamid und/oder lineares aliphatisches Copolyamid und

- teilaromatisches Copolyamid und/oder

- Ethylen- oder Propylen-basierendes Copolymer mit funktionellen Endgruppen

in Mengenanteilen von mindestens 3 bis maximal 30 Gew.-%, bezogen auf das Gesamtgewicht des Polymergemisches, enthalten.

5. Hülle nach wenigstens einem der vorhergehenden Ansprüche, dadurch gekennzeichnet, daß die wasserdampfsperrende Schicht überwiegend aus Ethylen- und/oder Propylen-Monomeren besteht.

6. Hülle nach wenigstens einem der vorhergehenden Ansprüche, dadurch gekennzeichnet, daß die wasserdampfsperrende Schicht typische Haftvermittler auf Basis von Ethylen- und/oder Propylen-Monomeren mit funktionellen Endgruppen enthält.

7. Hülle nach wenigstens einem der vorhergehenden Ansprüche, dadurch gekennzeichnet, daß das Ethylen-Vinylalkohol-Copolymer einen Ethylen-Gehalt von 20 bis 50 Gew.-% aufweist und der Verseifungsgrad des Ausgangsmaterials Ethylen-Vinylacetat-Copolymer mindestens 85 % beträgt.

8. Hülle nach wenigstens einem der vorhergehenden Ansprüche, dadurch gekennzeichnet, daß das Ethylen-Vinylalkohol-Copolymer als weitere Komponenten Propylen, Buten-1, Penten-1 oder Methylpenten-1 enthält.

9. Hülle nach wenigstens einem der vorhergehenden Ansprüche, dadurch gekennzeichnet, daß die feinstteiligen, anorganischen Pigmente, Zinkoxid, Titandioxid, Eisenoxid und/oder Siliciumdioxid sind.

10. Hülle nach wenigstens einem der vorhergehenden Ansprüche, dadurch gekennzeichnet, daß die Summe aller Schichtdicken der coextrudierten Hülle 35 bis 70 µm, insbesondere 40 bis 65 µm beträgt.

**Claims**

1. Biaxially stretched, transparent, tubular sausage casing, in particular for encasing sausage for simmering and boiling, coextruded in at least 4 layers, which contains at least two layers predominantly of aliphatic polyamide which form the inner and outer surfaces of the tube, and at least two further layers which are enclosed by the inner and outer polyamide layers, wherein at least one of the enclosed layers acts as a barrier to water vapour and has a polyolefinic character, and at least one further enclosed layer acts as a highly effective barrier to oxygen and comprises predominantly ethylene-vinyl alcohol copolymer, characterised in that at least one layer of the composite film contains a quantity of up to 3 wt.%, in relation to the total weight of the casing, of powdered inorganic pigments having an average particle size of between 0.01 and 5 µm, and at least one layer of the composite film comprises predominantly aliphatic polyamide and proportionately a quantity of from 1 to 15 wt.% of partially aromatic copolyamide, with the exception of composite films in the case of which the sausage casing is seamless, the layer enclosed by the inner and outer polyamide layers which has the function of a barrier to water vapour is constructed of polyethylene or polypropylene and/or ethylene and/or propylene-based copolymers, the inorganic pigments have a particle size of approximately 1 µm, a further layer of predominantly aliphatic polyamide is present which is modified by the addition of from 5 to 50 wt.%, in relation to the total weight of the polymer mixture, of (partially) aromatic polyamide and is connected in direct manner to at least one of the inner and outer polyamide layers.

2. Casing according to Claim 1, characterised in that the aliphatic polyamide is a linear polyamide (PA) 6, PA 11, PA 12 and/or linear copolyamide PA 6.66, PA 6.8, PA 6.9, PA 6.10, PA 6.11, PA 6.12 or a mixture of the aforementioned aliphatic polyamides and copolyamides.

3. Casing according to Claim 1, characterised in that the partially aromatic copolyamide comprises diamine monomers and dicarboxylic acid monomers.

4. Casing according to at least one of the preceding claims, characterised in that at least one of the layers comprising predominantly aliphatic polyamide contains from 70 to 95 wt.% of linear aliphatic polyamide and/or linear aliphatic copolyamide and

- partially aromatic copolyamide and/or
- copolymer based on ethylene or propylene and having functional end groups,

in proportions of at least 3 to a maximum of 30 wt.%, in relation to the total weight of the polymer mixture.

5. Casing according to at least one of the preceding claims, characterised in that the water vapour barrier layer comprises predominantly ethylene monomers and/or propylene monomers.

6. Casing according to at least one of the preceding claims, characterised in that the water vapour barrier layer contains typical primers based on ethylene monomers and/or propylene monomers having functional end groups.

7. Casing according to at least one of the preceding claims, characterised in that the ethylene-vinyl alcohol copolymer has an ethylene content of from 20 to 50 wt.%, and the degree of saponification of the ethylene-vinyl acetate copolymer starting material is at least 85%.

8. Casing according to at least one of the preceding claims, characterised in that the ethylene-vinyl alcohol copolymer contains as further components propylene, butene-1, pentene-1 or methylpentene-1.

9. Casing according to at least one of the preceding claims, characterised in that the powdered inorganic pigments are zinc oxide, titanium dioxide, iron oxide and/or silicon dioxide.

10. Casing according to at least one of the preceding claims, characterised in that the sum of all the layer thicknesses of the coextruded casing is from 35 to 70 µm, in particular from 40 to 65 µm.

**Revendications**

1. Enveloppe pour saucisses, de forme tubulaire, transparente, soumise à un étirage biaxe, coextrudée, comprenant au moins 4 couches, en particulier pour envelopper de la saucisse et du saucisson cuit, contenant au moins deux couches principalement en polyamide aliphatique qui forment les surfaces interne et externe de la gaine, et au moins deux couches supplémentaires qui sont entourées par les couches interne et externe en polyamide, dans laquelle au moins une couche parmi les couches entourées exerce un effet d'arrêt de la vapeur d'eau et présente un caractère polyoléfinique et au moins une autre couche parmi les couches entourées exerce un effet marqué d'arrêt de l'oxygène et est constituée principalement par des copolymères d'éthylène-alcool vinylique, caractérisée en ce qu'au moins une couche du composite de feuilles contient des pigments inorganiques très finement divisés possédant une granulométrie moyenne entre 0,01 et 5 micromètres en une quantité s'élevant jusqu'à 3 % en poids rapportés au poids total de l'enveloppe et au moins une couche du composite de feuilles est constituée principalement par du polyamide aliphatique et en partie par du copolyamide partiellement aromatique en une quantité de 1 à 15 % en poids, à l'exception des composites de feuilles dans lesquels l'enveloppe pour saucisses est exempte de joints, la couche entourée par les couches interne et externe en polyamide, possédant une fonction d'arrêt de la vapeur d'eau, est composée de polyéthylène ou de polypropylène et/ou de copolymères à base d'éthylène et/ou de propylène, les pigments inorganiques possèdent une granulométrie d'environ 1 µm, une couche supplémentaire constituée de polyamide principalement aliphatique est présente, qui a été modifiée par addition de polyamide (partiellement) aromatique à concurrence de 5 à 50 % en poids, rapportés au poids total du mélange polymère et cette couche est reliée directement à au moins une des couches interne et externe en polyamide.

2. Enveloppe selon la revendication 1, caractérisée en ce que le polyamide aliphatique est un polyamide linéaire (PA) 6, PA 11, PA 12 et/ou un copolyamide linéaire PA 6.66, PA 6.8, PA 6.9, PA 6.10, PA 6.11, PA 6.12 ou encore un mélange des polyamides et des copolyamides aliphatiques susmentionnés.

3. Enveloppe selon la revendication 1, caractérisée en ce que le copolyamide partiellement aromatique est constitué par des monomères de diamines et par des monomères d'acides dicarboxyliques.

4. Enveloppe selon au moins une des revendications précédentes, caractérisée en ce qu'au moins une des couches constituées principalement de polyamide aliphatique contient du polyamide aliphatique linéaire et/ou du copolyamide aliphatique linéaire à raison de 70 à 95 % en poids, et

   - du copolyamide partiellement aromatique et/ou

   - un copolymère à base d'éthylène ou de propylène comprenant des groupes terminaux fonctionnels,

   dans des proportions d'au moins 3 à 30 % en poids au maximum, rapportés au poids total du mélange polymère.

5. Enveloppe selon au moins une des revendications précédentes, caractérisée en ce que la couche d'arrêt de la vapeur d'eau est constituée principalement par des monomères d'éthylène et/ou de propylène.

6. Enveloppe selon au moins une des revendications précédentes, caractérisée en ce que la couche d'arrêt de la vapeur d'eau contient des agents adhésifs spécifiques à base de monomères d'éthylène et/ou de propylène comprenant des groupes terminaux fonctionnels.

7. Enveloppe selon au moins une des revendications précédentes, caractérisée en ce que le copolymère d'éthylène-alcool vinylique présente une teneur en éthylène de 20 à 50 % en poids et le degré de saponification du copolymère d'éthylène-acétate de vinyle utilisée comme matière de départ s'élève à au moins 85 %.

8. Enveloppe selon au moins une des revendications précédentes, caractérisée en ce que le copolymère d'éthylène-alcool vinylique contient, à titre de composants supplémentaires, du propylène, du butène-1, du pentène-1 ou du méthylpentène-1.

9. Enveloppe selon au moins une des revendications précédentes, caractérisée en ce que les pigments inorganiques très finement divisés sont l'oxyde de zinc, le dioxyde de titane, l'oxyde de fer et/ou le dioxyde de silicium.

10. Enveloppe selon au moins une des revendications précédentes, caractérisée en ce que la somme de toutes les épaisseurs de couches de l'enveloppe coextrudée s'élève à 35 à 70 µm, en particulier à 40 à 65 µm.